# EUROPEAN PATENT APPLICATION

(11) **EP 4 678 879 A1**
(43) Date of publication of application: **14.01.2026**
(21) Application number: 25180702.0
(22) Date of filing: 04.06.2025
(51) Int. Cl.: F01D 25/24

(54) **COUPLING FLANGE WITH SHIMS IN INDUSTRIAL MACHINE AND RELATED METHOD**

(30) Priority: 28.06.2024 PL 44905324
(71) Applicant: GE Vernova Technology GmbH, 5400 Baden (CH)
(72) Inventor: GRZESZCZAK, Wojciech, 02-256 Warsaw (PL); JAKUBCZAK, Przemyslaw Michael, 02-256 Warsaw (PL)
(74) Representative: Freigutpartners IP Law Firm

(57) **Abstract**

A coupling flange (200) for use in an industrial machine (100) is disclosed. The coupling flange (200) includes a body segment (202) having an arcuate surface (204) configured to couple to a surface (206) of an adjacent body segment (208) of an adjacent coupling flange (210). A first groove (220) and a second groove (222) are defined in the arcuate surface (204). A first shim (230) is configured to be positioned in the first groove (220), and a second shim (232) is configured to be positioned in the second groove (222). The first shim (230) and the second shim (232) are configured to mate the arcuate surface (204) with the surface (206) of the adjacent body segment (208) of the adjacent coupling flange (210). One or both of the shims (230, 232) can be replaced with revised versions thereof to accommodate any wear or deformation in the coupling flanges (200, 210) without removing the flanges (200, 210) from the industrial machine (100).

## Description

### TECHNICAL FIELD

The disclosure relates generally to industrial machine repair and, more specifically, to a coupling flange for an industrial machine including grooves with shims therein for mating with an adjacent coupling flange.

### BACKGROUND

Mating components in an industrial machine occasionally require repair due to wear and/or deformation. For example, in a turbomachine, a shroud may be positioned between a stationary casing and a rotating blade to define a path for a working fluid therebetween. The shroud may include a shroud coupling flange that couples at an axially forward surface thereof to an axially aft surface of a casing coupling flange of the stationary casing. The shroud also includes a seal element on an axially aft surface thereof for sealing with part of a rotating blade during operation of the turbomachine. The shroud and stationary casing can be formed in arcuate segments and coupled together along the mating surfaces of the two flanges to form an annulus.

During use of the turbomachine, one or more of the coupling flanges may wear and/or deform such that the seal element no longer seals against the rotating blade. There are two approaches to address the wear and/or deformation, each of which is problematic. In one approach, the shroud coupling flange is completely removed and machined to form a new axially forward surface thereon such that the new axially forward surface can be coupled to the axially aft surface of the casing coupling flange to cause the seal element to seal against the rotating blade. The repair requires complex and precise machining to angle the axially forward surface of the shroud flange to match any changes in the upstream casing flange that have occurred over time. In one example, the repair may require machining to create a new surface on the shroud flange having different axial extents, e.g., generating a frustoconical surface along the shroud flange (when assembled with other arcuate segments), to accommodate wear and/or deformation of one of the flanges. This approach requires removal of all fasteners and removal of at least the shroud flange and, consequently, is very time consuming and expensive. In addition, if further deformation occurs later in time, the entire process must be repeated.

In another approach, a shim may be positioned between the casing flange and the shroud flange to accommodate wear and/or deformation. The shim extends radially across most, if not all, of the mating surfaces of the shroud flange and the casing flange, and includes openings therein for fasteners, e.g., bolts, that couple the flanges. When a repair is required, at least the shroud flange is removed, any previously used shim is removed, and a new shim is installed. Since this approach requires removal of at least the shroud flange, it is also very time consuming and expensive. Using more advanced materials to address the durability issues is not commercially viable.

Similar challenges exist in a variety of other locations within any industrial machine such as a turbomachine.

### BRIEF DESCRIPTION

All aspects, examples and features mentioned below can be combined in any technically possible way.

An aspect of the disclosure includes a coupling flange for use in an industrial machine, the coupling flange comprising: a body segment having an arcuate surface configured to couple to a surface of an adjacent body segment of an adjacent coupling flange; a first groove defined in the arcuate surface; a second groove defined the arcuate surface; a first shim positioned in the first groove; and a second shim configured to be positioned in the second groove, wherein the first shim and the second shim are configured to mate the arcuate surface with the surface of the adjacent body segment of the adjacent coupling flange.

Another aspect of the disclosure includes any of the preceding aspects, and the first shim is different from the second shim.

Another aspect of the disclosure includes any of the preceding aspects, and the first groove is radially spaced from the second groove on the arcuate surface.

Another aspect of the disclosure includes any of the preceding aspects, and the first shim has a larger axial extent relative to the arcuate surface than the second shim.

Another aspect of the disclosure includes any of the preceding aspects, and the first shim has a larger radial extent relative to the arcuate surface than the second shim.

Another aspect of the disclosure includes any of the preceding aspects, and wherein the first shim has a larger axial extent relative to the arcuate surface than the second shim.

Another aspect of the disclosure includes any of the preceding aspects, and the first groove includes a first open end, and the first shim is slidably insertable into the first groove through the first open end; and wherein the second groove includes a second open end, and the second shim is slidably insertable into the second groove through the second open end.

Another aspect of the disclosure includes any of the preceding aspects, and the first groove has a first cross-sectional shape configured to mate with the first shim in the first groove, and the second groove has a second cross-sectional shape configured to mate with the second shim in the second groove.

Another aspect of the disclosure includes any of the preceding aspects, and the first cross-sectional shape and the second cross-sectional shape are three sided with perpendicular sides.

Another aspect of the disclosure includes any of the preceding aspects, and the first cross-sectional shape and the second cross-sectional shape are trapezoidal.

Another aspect of the disclosure includes any of the preceding aspects, and the first groove and the first shim have cross-sectional shapes configured to axially retain the first shim in the first groove, and the second groove and the second shim have cross-sectional shapes configured to axially retain the second shim in the second groove.

Another aspect of the disclosure includes any of the preceding aspects, and further comprising a retaining member coupled to the body segment at an open end of at least one of the first groove or the second groove to retain at least one of the first shim or the second shim in the at least one of the first groove or the second groove.

Another aspect of the disclosure includes any of the preceding aspects, and the first groove, the second groove, the first shim, and the second shim extend circumferentially along an entirety of the arcuate surface.

Another aspect of the disclosure includes a coupling for use in an industrial machine, the coupling comprising: a first coupling flange comprising a body segment having an arcuate surface, wherein the first coupling flange includes a first groove defined in the arcuate surface thereof and a second groove defined in the arcuate surface thereof, wherein the first groove is radially spaced from the second groove; a second coupling flange coupled to the first coupling flange, wherein an arcuate surface of the second coupling flange is configured to mate with the arcuate surface of the first coupling flange; wherein the first coupling flange includes: ; a first shim positioned in the first groove; a second shim positioned in the second groove, wherein the first shim is different from the second shim; and a plurality of fasteners coupling the first coupling flange to the second coupling flange with the first shim and the second shim in the first coupling flange contacting the arcuate surface of the second coupling flange.

Another aspect of the disclosure includes any of the preceding aspects, and one of the first shim or the second shim extends farther from the arcuate surface of the first coupling flange than the other of the first shim or the second shim.

Another aspect of the disclosure includes any of the preceding aspects, and one of the first shim or the second shim has a larger radial extent relative to the arcuate surface of the first coupling flange than the other of the first shim or the second shim.

Another aspect of the disclosure includes any of the preceding aspects, and the first groove includes a first open end, and the first shim is slidably insertable into the first groove through the first open end; and wherein the second groove includes a second open end, and the second shim is slidably insertable into the second groove through the second open end.

Another aspect of the disclosure includes any of the preceding aspects, and further comprising a retaining member coupled to the body segment at an open end of at least one of the first groove or the second groove to retain at least one of the first shim or the second shim in the at least one of the first groove or the second groove.

Another aspect of the disclosure includes any of the preceding aspects, and the first groove and the first shim have cross-sectional shapes configured to axially retain the first shim in the first groove; and the second groove and the second shim have cross-sectional shapes configured to axially retain the second shim in the second groove.

Another aspect of the disclosure includes a method, comprising: in a coupling including a first coupling flange coupled to a second coupling flange using fasteners in an industrial machine, wherein one of the coupling flanges includes: a body segment including an arcuate surface configured to mate with a surface of a body segment of the other coupling flange; a first groove defined in the arcuate surface; a second groove defined the arcuate surface; a first shim configured to be positioned in the first groove; and a second shim configured to be positioned in the second groove; at least partially uncoupling the first coupling flange and the second coupling flange, leaving the first coupling flange and the second coupling flange in the industrial machine; removing at least one of the first shim and the second shim; installing a new version of the at least one of the first shim and the second shim, wherein the new version of the at least one of the first shim and the second shim is different from a removed version of the at least one of the first shim and the second shim; and re-coupling the first coupling flange and the second coupling flange.

Two or more aspects described in this disclosure, including those described in this summary section, may be combined to form implementations not specifically described herein. That is, all embodiments described herein can be combined with each other.

The details of one or more implementations are set forth in the accompanying drawings and the description below. Other features, objects, and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic view of an illustrative industrial machine in the form of a turbomachine and including a coupling flange according to embodiments of the disclosure;
FIG. 2 shows a cross-sectional view of an illustrative turbine assembly that may be used with the turbomachine in FIG. 1 and including a coupling flange according to embodiments of the disclosure;
FIG. 3 shows an enlarged cross-sectional view of a conventional coupling of coupling flanges in a turbomachine;
FIG. 4 shows an enlarged cross-sectional view of a coupling of coupling flanges according to embodiments of the disclosure;
FIG. 5 shows an end view of a body segment of a coupling flange according to embodiments of the disclosure;
FIG. 6 shows a perspective view of a groove and shim in a coupling flange arrangement according to embodiments of the disclosure;
FIG. 7 shows a perspective view of a groove and shim arrangement in a coupling flange according to other embodiments of the disclosure;
FIG. 8 shows a schematic cross-sectional view of a groove and shim in a coupling flange arrangement according to embodiments of the disclosure;
FIG. 9 shows a schematic cross-sectional view of a groove and shim arrangement in a coupling flange according to other embodiments of the disclosure;
FIG. 10 shows a schematic cross-sectional view of a groove and shim arrangement in a coupling flange according to additional embodiments of the disclosure;
FIG. 11 shows a schematic cross-sectional view of a groove and shim arrangement in a coupling flange according to more embodiments of the disclosure;
FIG. 12 shows a schematic cross-sectional view of a groove and shim arrangement in a coupling flange according to embodiments of the disclosure;
FIG. 13 shows a schematic cross-sectional view of a groove and shim arrangement in a coupling flange according to other embodiments of the disclosure;
FIG. 14 shows an end view of a body segment of a coupling flange according to other embodiments of the disclosure;
FIG. 15 shows an end view of a body segment of a coupling flange according to additional embodiments of the disclosure;
FIG. 16 shows a schematic cross-sectional view of a coupling of coupling flanges according to other embodiments of the disclosure;
FIG. 17 shows an enlarged cross-sectional view of a coupling of coupling flanges in an at least partially de-coupled position according to embodiments of the disclosure; and
FIG. 18 shows an end view of a body segment of a coupling flange with shims slid out of grooves therein according to embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the current disclosure, it will become necessary to select certain terminology when referring to and describing relevant machine components within the illustrative application of an industrial machine such as a turbomachine. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. The term "axial" refers to movement or position parallel to an axis, e.g., an axis of a turbomachine. The term "radial" refers to movement or position perpendicular to an axis, e.g., an axis of a turbomachine. In cases such as this, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. A legend denoting an axial direction A and a radial direction R is shown in some of the drawings. Finally, the term "circumferential" refers to movement or position around an axis, e.g., a circumferential surface of a flange extending about an axis of a turbomachine. As indicated above, it will be appreciated that such terms may be applied in relation to the axis of the turbomachine.

As used herein, "downstream" and "upstream" are terms that indicate a direction relative to the flow of a fluid, such as the working fluid through the turbomachine or, for example, the flow of air through the combustor or coolant through one of the turbomachine's component systems. The term "downstream" corresponds to the direction of flow of the fluid, and the term "upstream" refers to the direction opposite to the flow. The terms "forward" and "aft," without any further specificity, refer to directions, with "forward" referring to the front or compressor end of the turbomachine, and "aft" referring to the rearward or turbine end of the turbomachine.

In addition, several descriptive terms may be used regularly herein, as described below. The terms "first," "second," and "third," may be used interchangeably to distinguish one component from another and are not intended to signify location or importance of the individual components.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event may or may not occur or that the subsequently described feature may or may not be present and that the description includes instances where the event occurs, or the feature is present and instances where the event does not occur, or the feature is not present.

Where an element or layer is referred to as being "on," "engaged to," 2 "connected to," "coupled to," or "mounted to" another element or layer, it may be directly on, engaged, connected, coupled, or mounted to the other element or layer, or intervening elements or layers may be present. In contrast, when an element is referred to as being "directly on," "directly engaged to," "directly connected to," or "directly coupled to" another element or layer, there are no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items. The verb forms of "couple" and "mount" may be used interchangeably herein.

As indicated above, the disclosure provides a coupling flange for use in an industrial machine such as a turbomachine, and a related method. The coupling flange includes a body segment having an arcuate surface configured to couple to a surface of an adjacent body segment of an adjacent coupling flange. A plurality of body segments can be arranged in an annulus to provide a complete circular coupling flange. The coupling flange includes a first groove defined in the arcuate surface, and a second groove defined the arcuate surface. A first shim is configured to be positioned in the first groove, and a second shim is configured to be positioned in the second groove. The first shim and the second shim are configured to mate the arcuate surface with the surface of the adjacent body segment of the adjacent coupling flange, e.g., to address any wear and/or deformation in one of the flanges. The shims are removable without removing the coupling flange from the industrial machine. The shims and/or grooves can be shaped to maintain the shims' position in an axial direction and prevent them from sliding in/out of the grooves. By modifying, for example, the axial thickness of the independent shims, it is possible to control axial position and/or tilt of the coupling flanges. The position and/or tilt control can also change the position of a seal element on the coupling flange that sealing mates with a moving part, such as a rotating turbine blade. Use of two or more independent shims also allows mating of fastener elements upstream and downstream flanges, assuring proper fastening thereof. The coupling flange reduces industrial machine, e.g., turbomachine, outage time and provides a more accurate and less expensive repair that also provides better control of clearances, saving the flanges from rubbing and increased stress, and ensuring proper cooling and performance. The coupling flange allows for continued use of less expensive material for the coupling flanges and surrounding structure and also meets hardware durability and performance requirements.

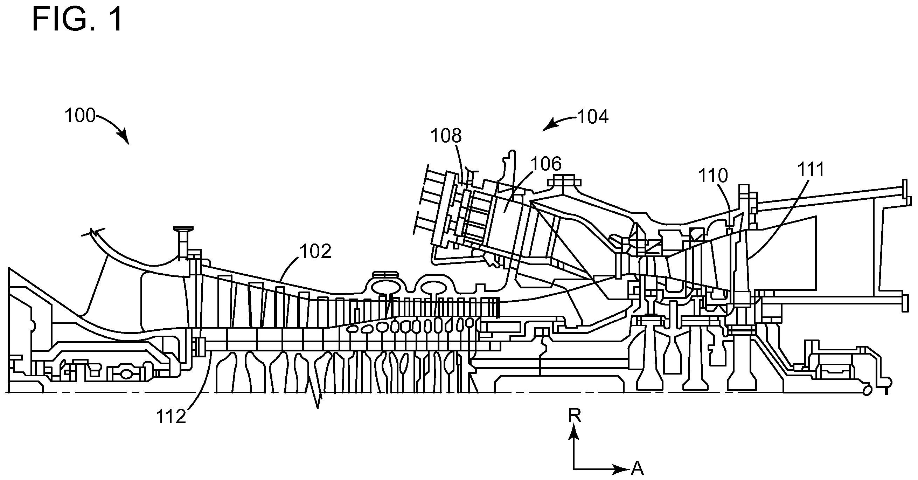

FIG. 1 shows a schematic view of an illustrative industrial machine, which may include a coupling flange according to teachings of the disclosure. In the example, the industrial machine includes a turbomachine 100 in the form of a combustion or gas turbine (GT) system. Turbomachine 100 includes a compressor 102 and a combustor 104. Combustor 104 includes a combustion region 106 and a fuel nozzle assembly 108. Turbomachine 100 also includes a turbine assembly 110 and a common compressor/turbine shaft or rotor 112. In one embodiment, turbomachine 100 may be a 7HA.03 engine, commercially available from GE Vernova. However, the present disclosure is not limited to any one particular GT system and may be implemented in connection with other engines including, for example, other HA, F, B, LM, GT, TM and E-class engine models of GE Vernova, and engine models of other companies. Furthermore, the present disclosure is not limited to any particular turbomachine, and may be applicable to, for example, steam turbines, jet engines, compressors, turbofans, etc. The present disclosure is also not limited to any particular turbomachine coupling flange and may be applicable to any coupling flange in the turbomachine or any industrial machine.

In operation, air flows through compressor 102, and compressed air is supplied to combustor 104. Specifically, the compressed air is supplied to fuel nozzle assembly 108 that is integral to combustor 104. Assembly 108 is in flow communication with combustion region 106. Fuel nozzle assembly 108 is also in flow communication with a fuel source (not shown in FIG. 1) and channels fuel and air to combustion region 106. Combustor 104 ignites and combusts fuel. Combustor 104 is in flow communication with turbine assembly 110 in which gas stream thermal energy is converted to mechanical rotational energy. Turbine assembly 110 includes a turbine 111 (e.g., an expansion turbine) that rotatably couples to and drives rotor 112. Compressor 102 also is rotatably coupled to rotor 112. In the illustrative embodiment, there are a plurality of combustors and fuel nozzle assemblies 108.

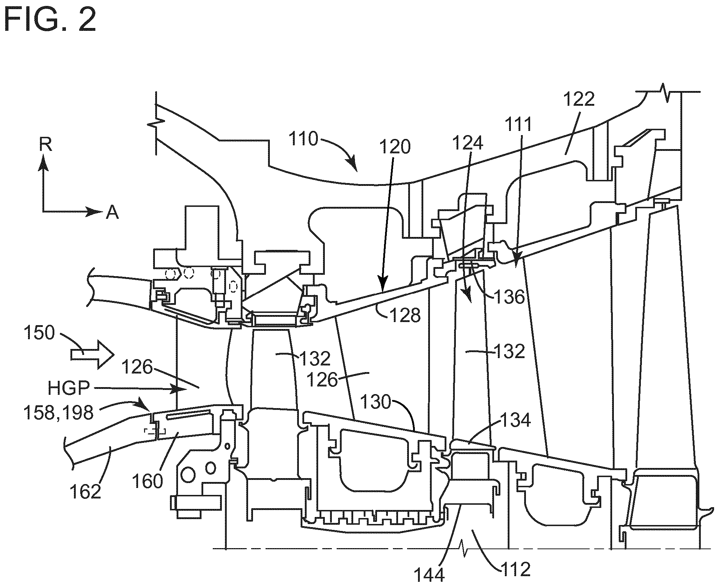

FIG. 2 shows a cross-sectional view of an illustrative turbine assembly 110 of turbomachine 100 (FIG. 1) that may be used with the gas turbine system in FIG. 1. Turbine 111 of turbine assembly 110 includes a row of nozzles or vanes 120 coupled to a stationary casing 122 of turbomachine 100 and axially adjacent a row 124 of rotating blades 132. A stationary vane or nozzle 126 may be held in turbine assembly 110 by a radially outer platform 128 and a radially inner platform 130. Row 124 of blades in turbine assembly 110 includes rotating blades 132 coupled to rotor 112, via a shank 144, and rotating with the rotor. Rotating blades 132 may include a radially inward platform (at root of blade) 134 coupled to rotor 112 and, optionally, a radially outward tip shroud 136 (at tip of blade). Turbine 111 may also include a coupling 158, 198 including a coupling flange 160 that couples to an adjacent coupling flange 162. Coupling flange 160 may be referred to as a 'downstream coupling flange' or 'downstream flange,' and coupling flange 162 may be referred to as an "upstream coupling flange' or 'upstream flange' due to their positions relative to flow of a working fluid 150 through turbine 111.

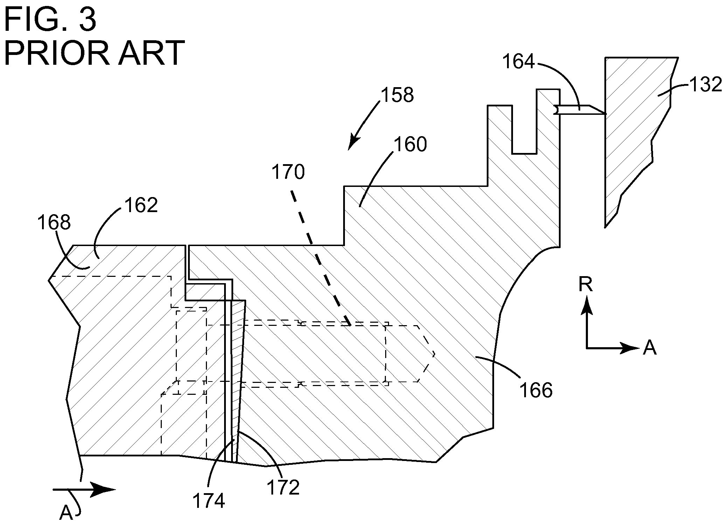

FIG. 3 shows an enlarged cross-sectional view of conventional coupling 158 of coupling flanges 160, 162. Upstream coupling flange 162 is coupled to stationary casing 122 (FIG. 2), and downstream coupling flange 160 may be coupled to upstream coupling flange 162. Downstream coupling flange 160 includes a seal element 164 that seals with part of rotating blade 132 during operation of turbine 111 (FIG. 2). As understood in the art, each coupling flange 160, 162 includes a plurality of body segment segments 166, 168, respectively, that extend into and out of the page of FIG. 3 and that collectively form an annulus matching a particular axial location of turbine 111 (FIG. 2). Any number of body segment segments 166, 168 may be used. Any number or type of fasteners 170 may be used to couple flanges 160, 162 together. Fasteners 170 may be spaced circumferentially along the annulus of coupling flanges 160, 162.

During operation of turbomachine 100 (FIG. 1), wear and/or deformation may occur in one or more of coupling flanges 160, 162. The wear or deformation may prevent seal element 164 from sealing with rotating blade 132, or otherwise distort the coupling. In order to address, among other things, the wear and/or deformation, coupling flange 160 may be removed and a new surface 172 machined thereon (see dashed line), or a radially extending shim 174 having different axial extents may be used. In one example, new surface 172 may generate a frustoconical surface on a forward-facing surface (also 172) of coupling flange 162, although other shapes are also possible. These approaches suffer from the drawbacks described herein.

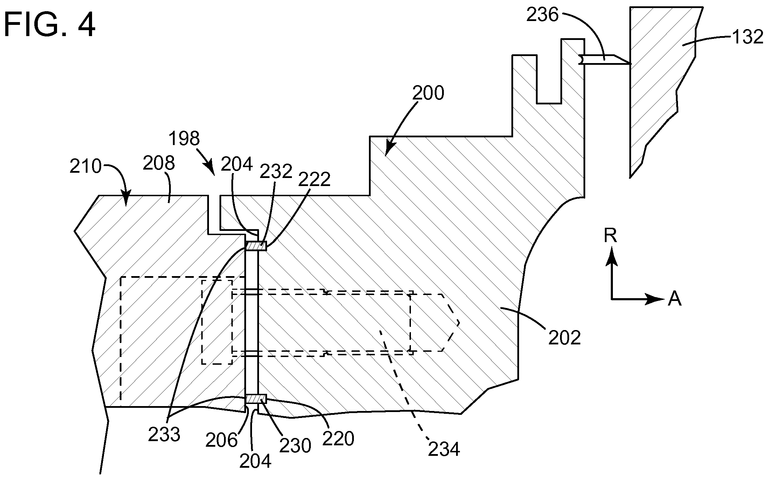

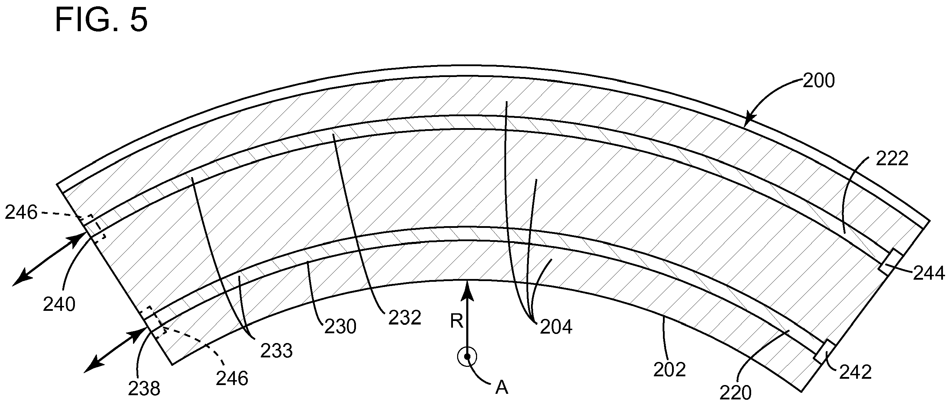

FIG. 4 shows an enlarged cross-sectional view of a coupling 198 between coupling flanges 200, 210, and FIG. 5 shows an end view of coupling flange 200 for use in a turbomachine 100 (FIG. 1), according to embodiments of the disclosure. Coupling flange 200 may be referred to as a 'downstream coupling flange' or 'downstream flange,' and coupling flange 210 may be referred to as an 'upstream coupling flange' or 'upstream flange' due to their positions relative to flow of a working fluid 150 (FIG. 2) through turbine 111 (FIG. 2) in which employed. Coupling flange 200 includes a body segment 202 having an arcuate surface 204 configured to couple to a surface 206 (FIG. 4) of an adjacent body segment 208 of an adjacent coupling flange 210. Surface 206 of adjacent coupling flange 210 may have the same arcuate arrangement as coupling flange 200, or another shape. It will be recognized that the extent of arcuate surface 204 can be user-defined based on the number of body segments 202 used to form the annulus for a particular axial location of turbine 111 (FIG. 2). Typically, each body segment 202 includes an equal arcuate extent of the annulus, i.e., each extends 360°/n, where n is the number of arcuate segments used in the annulus. However, equal arcuate extents are not necessary in all cases. Accordingly, in non-limiting examples, body segment(s) 202 of coupling flange 200 (and/or flange 210) may extend 10°, 20°, 30°, 40°, 45°, 50°, 60°, 70°, 80°, 90°, 100°, 110°, 120°, 130°, 135°, 140°, 150°, 160°, 170°, 180°, etc.

Continuing with FIGS. 4-5, coupling flange 200 also includes a first groove 220 defined in arcuate surface 204 and a second groove 222 defined in arcuate surface 204. The first groove 220 and the second groove 222 are spaced apart from one another in the radial direction. Each groove 220, 222 may extend any circumferential extent of body segment 202, but typically extends most, if not all, of the circumferential extent of body segment 202. Coupling flange 200 also includes a first shim 230 configured to be positioned in first groove 220 and a second shim 232 configured to be positioned in second groove 222. First shim 230 and second shim 232 are configured to mate arcuate surface 204 of coupling flange 200 with surface 206 of adjacent body segment 208 of adjacent coupling flange 210. As used herein, "mate" or "mating" indicates shims 230, 232 position flanges 200, 210 in a manner that they can be fastened together (e.g., with fasteners 234 such as bolts, screws or other fasteners) and are positioned properly for operation of turbomachine 100 (FIG. 1). In terms of proper positioning, flanges 200, 210 may have certain requirements thereon to, among other things, ensure cooling therebetween, ensure operational positioning of a seal element 236 on coupling flange 200 relative to turbine rotating blade 132, and/or ensure spacing to prevent contact, rubbing, excessive stress/strain, wear and/or deformation. Grooves 220, 222 and shims 230, 232 may be provided in coupling flange 200 as manufactured or can be added to a used coupling flange, e.g., after removal from turbine 111 (FIG. 2) and machining of grooves 220, 222 therein.

First shim 230 and second shim 232 can take a variety of forms to achieve the desired positioning of flanges 200, 210. Notably, first shim 230 may be different from second shim 232. In this manner, shims 230, 232 provide a collective surface 233 as required for proper positioning of coupling flanges 200, 210. For example, shims 230, 232 may provide collective surface 233 that does not match that of arcuate surface 204 either as manufactured or as machined after use (like frustoconical surface 172 (FIG. 3)). During repair, coupling flanges 200, 210 can be loosened, but not removed, and shims 230 and/or 232 can be removed and replaced and/or revised to provide any collective surface 233 necessary to address, among other things, wear and/or deformation in one or more flanges 200, 210 caused during operation of turbomachine 100 (FIG. 1). Shims 230 and/or 232 can be replaced quickly and easily and can address any axial and/or tilt adjustment required. Coupling flange 200 thus is less time consuming and expensive to repair, reducing the down time for turbomachine 100 (FIG. 1). Further, there is no need to precisely machine coupling flange 200. Shims 230, 232 also remove the need to use more durable and/or expensive materials for either flange 200, 210.

Coupling flange 200 may have first groove 220 radially spaced from second groove 222 on arcuate surface 204. Consequently, first shim 230 may also be radially spaced from second shim 232 on arcuate surface 204. Any radial spacing may be employed.

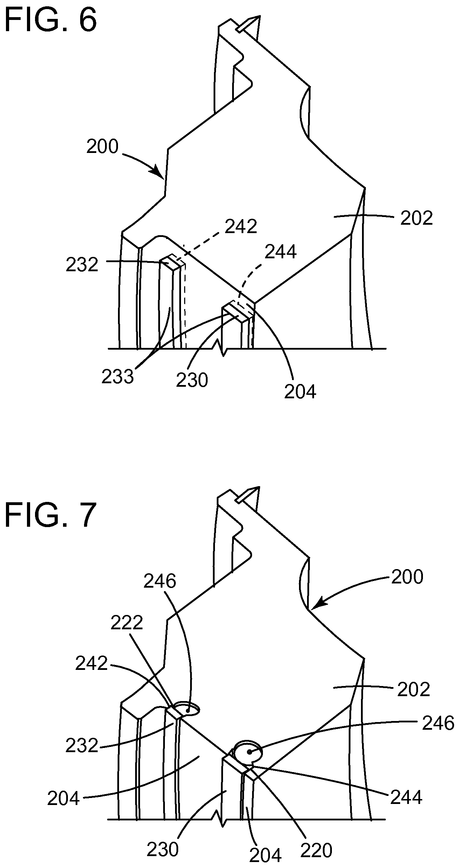

Shims 230, 232 are selectively removable from grooves 220, 222. More particularly, as shown in FIG. 5, first groove 220 may include a first open end 238, and first shim 230 is slidably insertable into (and out of) first groove 220 through first open end 238. Similarly, second groove 222 includes a second open end 240, and second shim 232 is slidably insertable into (and out of) second groove 222 through second open end 240. Opposing ends 242, 244 of grooves 220, 222, respectively, may be open or closed. As shown in the end view of FIG. 6, ends 242, 244 of grooves 220, 222, respectively, may be closed in a manner that prevents shims 230, 232 from sliding out of the grooves. In another embodiment, shown in the end view of FIG. 7, a retaining member 246 may be coupled to body segment 202 at any open end 238, 240, 242, 244 of at least one of first groove 220 and second groove 222 to retain at least one of first shim 230 and second shim 232 in the at least one of first groove 220 and second groove 222. Retaining member(s) 246 may include any manner of structural element capable of preventing sliding movement of shims 230, 232 from respective grooves 220, 222. In one example, shown in FIG. 7, retaining members 246 may include a removable threaded fastener coupled into a mating opening in body segment 202 in a manner to prevent sliding movement of shims 230, 232. In other embodiments, a separate member may be otherwise coupled to body segment 202, e.g., by welds, threaded fasteners, etc., to prevent sliding movement of shims 230, 232. Retaining members 246 can be applied to one end (e.g., ends 242, 244 as shown in FIG. 7) or both ends (e.g., 238, 240 and 242, 244 as shown in dashed lines in FIG. 5) of first and second grooves 220, 222.

In order to accommodate removal, coupling flange 200 or one or more body segments 202 thereof may be loosened (e.g., by loosening fasteners 234 that couple coupling flanges 200, 210 together) but not removed from turbomachine 100. The additional axial spacing provided allows access to one or more open ends 238, 240, 242, 244 of body segment 202, perhaps with some axial manipulation of the body segment(s). Any retaining members 246 can then be removed, and the shim(s) 230, 232 removed and/or replaced. The reverse operation will secure shims 230, 232 and coupling flanges 200, 210 into a functional position. In an alternative embodiment, coupling flange 200 or one or more body segments 202 thereof may be removed from turbomachine 100 (FIG. 1), and shims 230, 232 can be removed and/or replaced. This latter option, however, is not ideal for reasons stated herein.

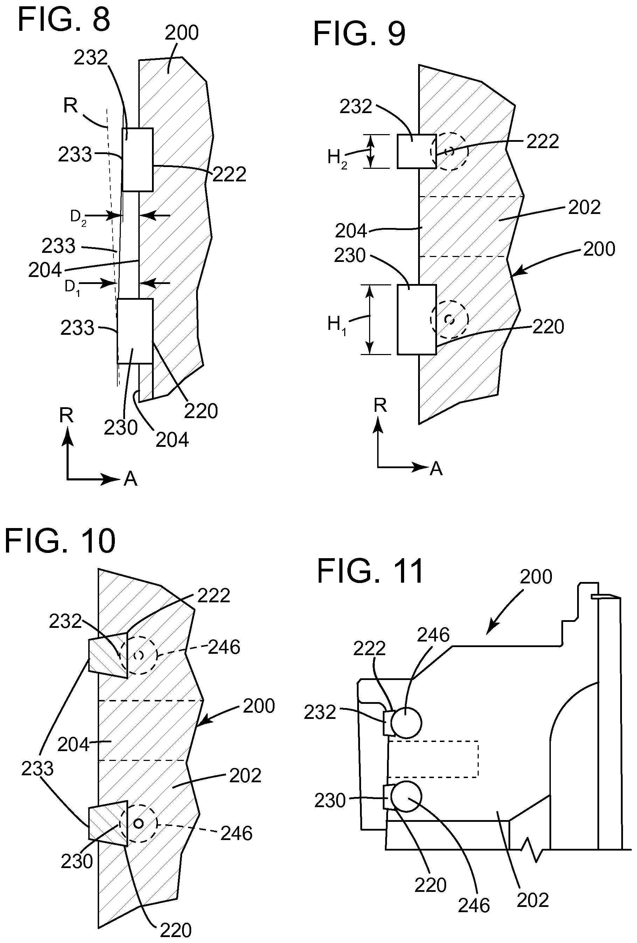

As noted, first shim 230 and second shim 232 can take a variety of forms to achieve the desired positioning of flanges 200, 210. With further regard to shims 230, 232, FIGS. 8-16 show enlarged schematic cross-sectional views of various arrangements of shims 230, 232 according to embodiments of the disclosure. It is emphasized that any of the arrangements of shims 230, 232 disclosed herein may be provided at manufacture of coupling flange 200 or may be provided as part of a repair or revision of coupling flange 200. Further, any of the arrangements of grooves/shims disclosed herein are not mutually exclusive and may be used with any other possible arrangement.

In certain embodiments, as shown in FIG. 4, first shim 230 and second shim 232 may be identical. In this case, shims 230, 232 may provide collective surface 233 that provides the same positioning and/or function for flanges 200, 210 that would be provided solely by arcuate surface 204 on coupling flange 200 were shims 230, 232 not used. This arrangement is most likely provided on coupling flange 200 at the time of manufacturing where coupling flanges 200, 210 have not been exposed to wear/deformation and are set according to manufacturing specifications. However, shims 230, 232 can be different at the time of manufacture to provide collective surface 233 with different positioning and/or functioning for flanges 200, 210 than would normally be provided by arcuate surface 204 on coupling flange 200.

In other embodiments, first shim 230 and second shim 232 may be different, i.e., to provide a collective surface 233 different from what arcuate surface 204 could provide. In one example, as shown in FIG. 8, one of first shim 230 and second shim 232 may extend farther from arcuate surface 204 than the other of first shim 230 and second shim 232. In FIG. 8, for example, first shim 230 extends distance D1 from arcuate surface 204, and second shim 232 extends a different distance D2 from arcuate surface 204. In the example shown, first distance D1 is greater than second distance D2. In one example, the different distances D1, D2 provide collective surface 233 that is different from a radius R (relative to axis A of turbine 111 (FIG. 1)) so as to provide tilt and/or axial positioning control between flanges 200, 210. See line denoting collective surface 233 angled relative to radius R. While first shim 230 is shown axially larger than second shim 232 in FIG. 8, the different sizes can be switched, i.e., with second shim 232 axially larger than first shim 230, which reverses the tilt.

In another option, shown in FIG. 9, one of first shim 230 and second shim 232 may have a larger radial extent relative to arcuate surface 204 than the other of first shim 230 and second shim 232. In FIG. 9, first shim 230 has radial extent H1 that is greater than radial extent H2 of second shim 232. While first shim 230 is shown radially larger than second shim 232 in FIG. 9, the different sizes can be switched, i.e., with second shim 232 radially larger than first shim 230. The different radial extents may be used to address different forces applied at different radial positions of coupling flanges 200, 210.

As shown in the drawings, first groove 220 has a first cross-sectional shape configured to mate with first shim 230 in first groove 220, and second groove 222 has a second cross-sectional shape configured to mate with second shim 232 in second groove 222. The shapes of grooves 220, 222 and shims 230, 232 can have different arrangements. As shown in, for example, FIG. 8 and 9, first cross-sectional shape and the second cross-sectional shape may be three sided with perpendicular sides, i.e., a bracket shape (] or [ shape). Here, shims 230, 232 have at least an axial facing end in grooves 220, 222, respectively, between opposing sides that are parallel to one another and that are perpendicular to the axial facing end. In other words, the cross-sectional shapes may each define an open channel. Other mating cross-sections are also possible such as but not limited to semi-circular shapes and shapes having a curved portion and straight portions.

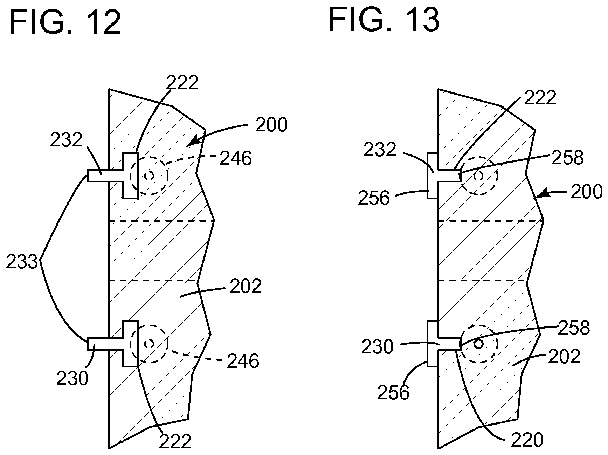

FIGS. 10-12 show another option in which cross-sectional shapes of first groove 220 and first shim 230 are configured to axially retain first shim 230 in first groove 220, and cross-sectional shapes of second groove 222 and second shim 232 are configured to axially retain second shim 232 in second groove 222. In one example, shown in FIGS. 10 and 11, the cross-sectional shapes of first shim 230 and first groove 220 and cross-sectional shapes of second shim 232 and second groove 222 are trapezoidal. The trapezoidal (or trapezium) arrangement can take any form that retains shims 230, 232 in grooves 220, 222, respectively. The trapezoidal cross-sectional shapes may include, for example, one pair of parallel sides with the two non-parallel sides extending at the same angle relative to the parallel sides (i.e., isosceles trapezoid, shown), or the two non-parallel sides may extend at different angles relative to the parallel sides. In another generally trapezoidal arrangement, shown in FIG. 11, one of the sides that would normally be parallel may be curved. In another example, shown in FIG. 12, shims 230, 232 and grooves 220, 222 may have mating T-shape cross-sectional shapes. Other mating cross-sectional shapes that axially retain shims 230, 232 in grooves 220, 222 are also possible. Further, while the cross-sectional shapes of the first shim/groove and the second shim/groove are shown as the same, this is not necessary in all cases.

FIG. 13 shows another option in which shims 230, 232 have a portion 256 thereof outside of respective grooves 220, 222 that is radially larger than a portion 258 thereof inside respective grooves 220, 222. Here, an axial face of portion 256 may bear against arcuate surface 204.

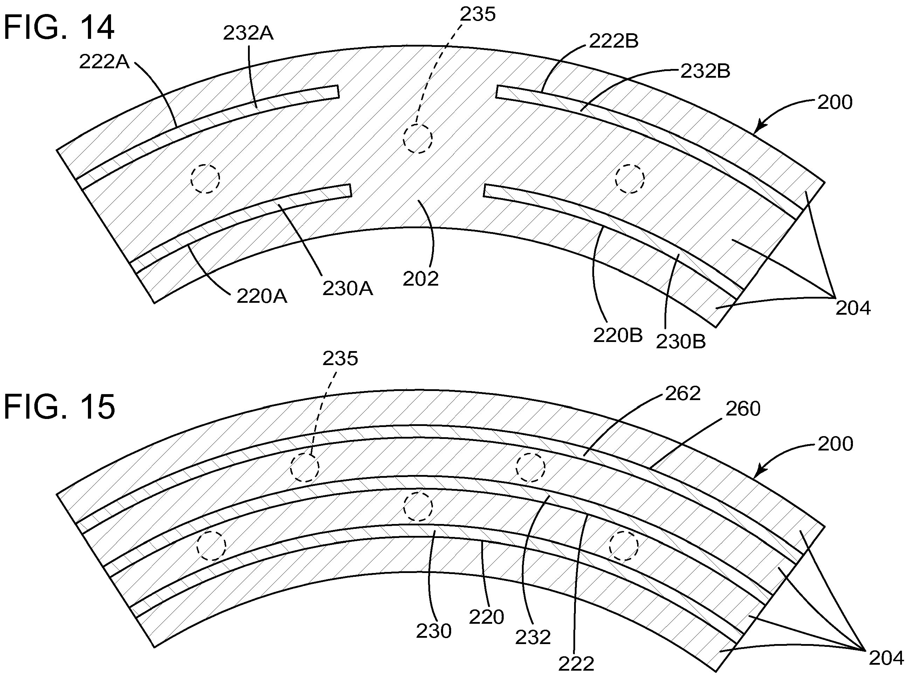

As described herein, and as shown in FIG. 5, first groove 220, second groove 222, first shim 230 and second shim 232 extend circumferentially along most, if not all, of arcuate surface 204. However, as shown in the end view of FIG. 14, first groove 220, second groove 222, first shim 230 and second shim 232 may extend only partially circumferentially along arcuate surface 204. Here, one or more shim/groove sets 230A/220A, 232A/222A, 230B/220B, and 232B/222B may be used in a single body segment 202.

It will be recognized that while two radially spaced groove and shim sets are shown on body segment 202, as shown in FIG. 14, more than two groove and shim sets can be used on a body segment 202 of coupling flange 200 - see third groove 260 with third shim 262 in FIG. 15. More than three groove/shim sets can also be used. The location, size and/or number of fasteners 234 (FIG. 4) and openings 235 in arcuate surface 204 may need to be adjusted to accommodate additional grooves.

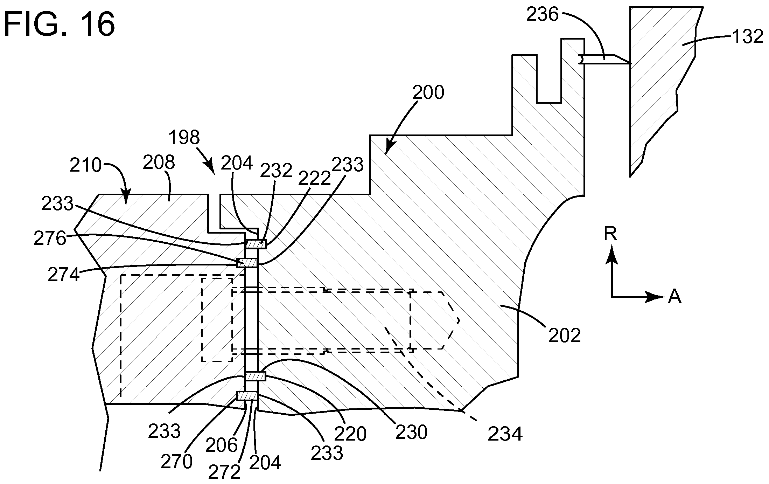

In addition, as shown in FIG. 16, while groove and shim sets are shown on only one coupling flange 200 of coupling 198, they can be provided on both coupling flanges 200, 210. See third groove 270 with third shim 272 therein and fourth groove 274 with fourth shim 276 in second coupling flange 210. Any of the teachings described relative to coupling flange 200 can be applied to coupling flange 210.

While coupling 158 has been shown in FIG. 2 as in a wheel space shroud location upstream of first stage nozzle 126, coupling 158 could be used anywhere in turbine 111.

Embodiments of the disclosure also include coupling 198 for use in turbomachine 100 (FIG. 1). With reference to FIG. 4, coupling 198 includes first coupling flange 200 and second coupling flange 210 coupled to first coupling flange 200. As described herein, first coupling flange 200 may include arcuate surface 204 configured to mate with the arcuate surface 206 of second coupling flange 210. At least one flange, e.g., first coupling flange 200, may include first groove 220 defined in arcuate surface 204 thereof and second groove 222 defined in arcuate surface 204 thereof. First groove 220 is radially spaced from second groove 222 on arcuate surface 204 of first coupling flange 200. Coupling 198 also includes first shim 230 configured to be positioned in first groove 220 and second shim 232 configured to be positioned in second groove 222. In certain embodiments, first shim 230 is different from second shim 232. A plurality of fasteners 234 (circumferentially spaced) couple first coupling flange 200 to second coupling flange 210 with first shim 230 and second shim 232 in first coupling flange 200 contacting arcuate surface 206 of second coupling flange 210.

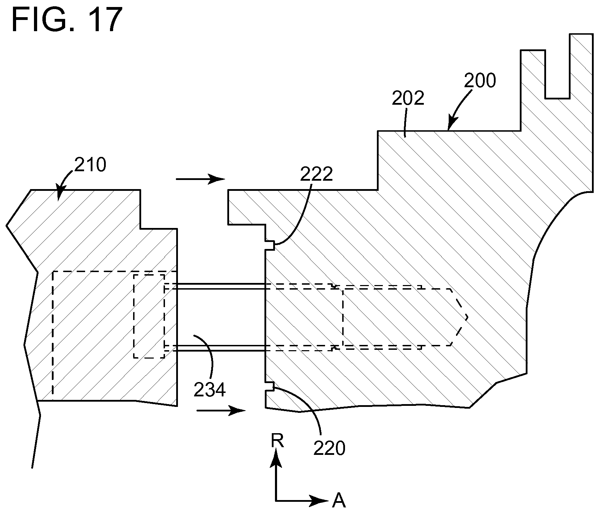

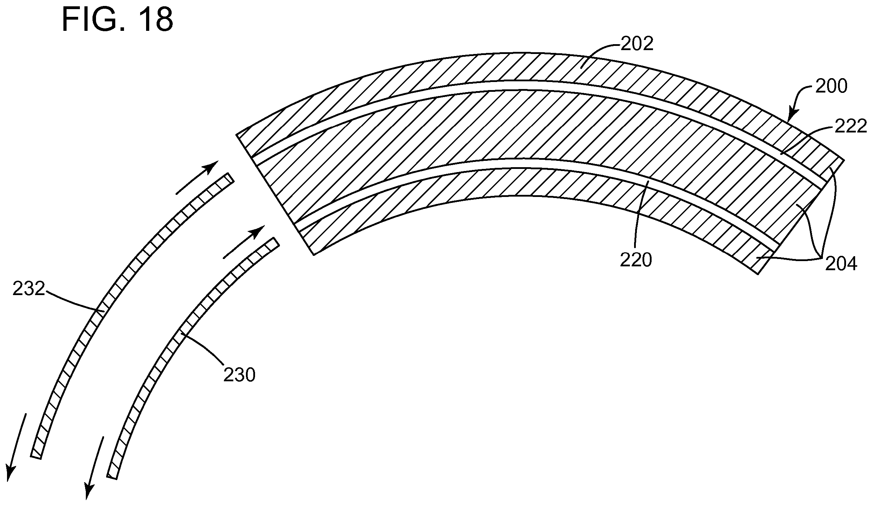

In operation, according to embodiments of a method of the disclosure, coupling 198 includes first coupling flange 200 coupled to second coupling flange 210 using fasteners 234 in turbomachine 100. One of the coupling flanges, i.e., first coupling flange 200 as described, includes body segment 202 including arcuate surface 204 configured to mate with surface 206 of body segment of the other coupling flange, first groove 220 defined in the arcuate surface 204, second groove 222 defined arcuate surface 204, first shim 230 configured to be positioned in first groove 220, and second shim 232 configured to be positioned in second groove 222. As shown in FIGS. 17 and 18, first coupling flange 200 may be at least partially uncoupled, e.g., loosened, from second coupling flange 210, leaving first coupling flange 200 and second coupling flange 210 in turbomachine 100 (FIG. 1). This step may be provided by loosening and/or removing fasteners 234 from one or more body segments 202 of flange(s) 200, 210 so at least first coupling flange 200 to be worked on can be accessed from ends 238, 240 and/or 242, 244 (FIG. 5).

The accessing may also require partially decoupling body segments 202 circumferentially adjacent body segment 202 to be worked on. Once access is achieved, the method may include removing at least one of first shim 230 and second shim 232. Any retaining members 246 used may be removed, if necessary, to permit shim(s) 230, 232 to be slid out or otherwise removed from groove(s) 220, 222. As shown in FIGS. 4 and 5, the method may also include installing a new version of at least one of first shim 230 or second shim 232. The new version of shim(s) 230, 232 may be different from a removed version of shim(s) 230, 232. The differences may manifest in any manner described herein relative to shim configurations, e.g., different axial extent, radial height, portion size inside/outside of groove, etc. As shown in FIG. 4, the method may then include re-coupling first coupling flange 200 and second coupling flange 210. Shims 230, 232 may be configured in any manner described herein to reposition and/or tilt first coupling flange 200 relative to second coupling flange 210 in any manner to address any wear, deformation or other structural repair requirements. Where first coupling flange 200 includes seal element 236, shims 230, 232 may function to re-position seal element 236 to contact rotating blade 132.

The disclosure provides various technical and commercial advantages, examples of which are discussed herein. Embodiments of the disclosure provide a mechanism by which it is possible to control axial position and/or tilt of the coupling flange(s) in an easy, quick and inexpensive manner. The groove and shim arrangements allow for easy control of axial and tilt positioning of the coupling flange to accommodate to a variety of wear and deformation, e.g., in the upstream coupling flange over time. Use of two or more independent shims also allows mating of fastener elements through upstream and downstream flanges, assuring proper fastening thereof. The coupling flanges reduce turbomachine outage time and provide a more accurate and less expensive repair that also provide better control of clearances, saving the flanges from rubbing, decreasing stress, and ensuring proper cooling and performance. The coupling flanges also allow for continued use of less expensive material for the coupling flanges and surrounding structure and still meet hardware durability and performance requirements.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," is not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" or "about," as applied to a particular value of a range, applies to both end values and, unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

## Claims

1. A coupling flange (200) for use in an industrial machine (100), the coupling flange (200) comprising:
a body segment (202) having an arcuate surface (204) configured to couple to a surface (206) of an adjacent body segment (208) of an adjacent coupling flange (210);
a first groove (220) defined in the arcuate surface (204);
a second groove (222) defined the arcuate surface (204);
a first shim (230) positioned in the first groove (220); and
a second shim (232) configured to be positioned in the second groove (222),
wherein the first shim (230) and the second shim (232) are configured to mate the arcuate surface (204) with the surface (206) of the adjacent body segment (208) of the adjacent coupling flange (210).

2. The coupling flange (200) of claim 1, wherein the first shim (230) is different from the second shim (232).

3. The coupling flange (200) of claim 1 or 2, wherein the first groove (220) is radially spaced from the second groove (222) on the arcuate surface (204).

4. The coupling flange (200) of claim 3, wherein the first shim (230) has a larger axial extent relative to the arcuate surface (204) than the second shim (232).

5. The coupling flange (200) of claim 1 or 2, wherein the first shim (230) has a larger radial extent relative to the arcuate surface (204) than the second shim (232).

6. The coupling flange (200) of claim 1 or 2, wherein the first shim (230) has a larger axial extent relative to the arcuate surface (204) than the second shim (232).

7. The coupling flange (200) of any preceding claim, wherein the first groove (220) includes a first open end (238), and the first shim (230) is slidably insertable into the first groove (220) through the first open end (238); and wherein the second groove (222) includes a second open end (240), and the second shim (232) is slidably insertable into the second groove (222) through the second open end (240).

8. The coupling flange (200) of claim 1 or 2, wherein the first groove (220) has a first cross-sectional shape configured to mate with the first shim (230) in the first groove (220), and the second groove (222) has a second cross-sectional shape configured to mate with the second shim (232) in the second groove (222).

9. The coupling flange (200) of claim 8, wherein the first cross-sectional shape and the second cross-sectional shape are three sided with perpendicular sides.

10. The coupling flange (200) of claim 9, wherein the first cross-sectional shape and the second cross-sectional shape are trapezoidal.

11. The coupling flange (200) of claim 1 or 2, wherein the first groove (220) and the first shim (230) have cross-sectional shapes configured to axially retain the first shim (230) in the first groove (220), and the second groove (222) and the second shim (232) have cross-sectional shapes configured to axially retain the second shim (232) in the second groove (222).

12. The coupling flange (200) of claim 1, further comprising a retaining member (246) coupled to the body segment (202) at an open end (238, 240) of at least one of the first groove (220) and the second groove (222) to retain at least one of the first shim (230) and the second shim (232) in the at least one of the first groove (220) and the second groove (222).

13. The coupling flange (200) of claim 1, wherein the first groove (220), the second groove (222), the first shim (230), and the second shim (232) extend circumferentially along an entirety of the arcuate surface (204).

14. A coupling (198) for use in an industrial machine (100), the coupling comprising:
the coupling flange (200) of any of claims 1 to 13;
a second coupling flange (210) coupled to the coupling flange (200), wherein the second coupling flange (210) is the adjacent coupling flange (200), and the surface (206) of the second coupling flange (210) is configured to mate with the arcuate surface (204) of the coupling flange (200); and
a plurality of fasteners (234) coupling the coupling flange (200) to the second coupling flange (210) with the first shim (230) and the second shim (232) in the coupling flange (210) contacting the surface (206) of the second coupling flange (210).

15. A method of repairing a coupling (198) in an industrial machine (100), the industrial machine (100) comprising:
a coupling (198) including a first coupling flange (200) coupled to a second coupling flange (210) using one or more fasteners (234) in an industrial machine (100), wherein one of the first or second coupling flanges (200, 210) includes:
a body segment (202) including an arcuate surface (204) configured to mate with a surface of a body segment (202) of the other coupling flange (210);
a first groove (220) defined in the arcuate surface (204);
a second groove (222) defined the arcuate surface (204);
a first shim (230) configured to be positioned in the first groove (220); and
a second shim (232) configured to be positioned in the second groove (222);
the method comprising:
at least partially uncoupling the first coupling flange (200) and the second coupling flange (210), leaving the first coupling flange (200) and the second coupling flange (210) in the industrial machine (100);
removing at least one of the first shim (230) or the second shim (232);
installing a new version of the at least one of the first shim (230) or the second shim (232), wherein the new version of the at least one of the first shim (230) or the second shim (232) is different from a removed version of the at least one of the first shim (230) or the second shim (232); and
re-coupling the first coupling flange (200) and the second coupling flange (210).
